(19) Europäisches Patentamt
European Patent Office
Office européen des brevets

(11) **EP 2 738 376 A1**

(12) **EUROPEAN PATENT APPLICATION**
published in accordance with Art. 153(4) EPC

(43) Date of publication:
**04.06.2014 Bulletin 2014/23**

(51) Int Cl.:
***F02D 45/00*** (2006.01)    ***F02D 21/08*** (2006.01)

(21) Application number: **11870134.1**

(22) Date of filing: **28.07.2011**

(86) International application number:
**PCT/JP2011/067302**

(87) International publication number:
**WO 2013/014789 (31.01.2013 Gazette 2013/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventors:
• **SHIMASAKI, Yuichi**
**Toyota-shi**
**Aichi 471-8571 (JP)**

• **AOYAMA, Yukitoshi**
**Toyota-shi**
**Aichi 471-8571 (JP)**

(74) Representative: **Albutt, Anthony John**
**D Young & Co LLP**
**120 Holborn**
**London EC1N 2DY (GB)**

(54) **INTERNAL COMBUSTION ENGINE CONTROL APPARATUS**

(57)    An internal combustion engine control device includes: detection means (216, 110) for detecting crank angle speed of the internal combustion engine (200); calculation means (120) for calculating a combustion state index value (MI) for indicating a combustion state of the internal combustion engine based on the crank angle speed detected by the detection means; and first determination means (130) for determining whether or not white smoke is generated from the internal combustion engine and whether or not misfire of the internal combustion engine occurs by comparing the combustion state index value calculated by the calculation means with a specified first threshold (A) and a specified second threshold (B) larger than the first threshold.

FIG. 1

## Description

TECHNICAL FIELD

The present invention relates to technical fields of internal combustion engine control devices that can detect white smoke from the internal combustion engines, for example.

BACKGROUND ART

In recent years, an internal combustion engine such as a diesel engine, for example, that is installed on a vehicle is required to reduce white smoke particularly generated at a low temperature or high altitude for a reason of environmental protection or the like (see Patent Documents 1 through 10, for example).

For example, Patent Document 1 discloses a technique for obtaining the transparency (opacity) of exhaust gas by disposing a smoke sensor (gas sensor) in an exhaust passage of the internal combustion engine installed on the vehicle and determining whether the white smoke is generated or black smoke is generated in response to the transparency.

In addition, Patent Document 2, for example, discloses a technique for reducing the white smoke by energizing a glow plug. For example, Patent Document 3 discloses a technique for reducing the white smoke by energizing a heater disposed in a filter of the exhaust passage. For example, Patent Document 4 discloses a technique for reducing the white smoke by splitting fuel injection. For example, Patent Document 5 discloses a technique for stabilizing combustion by increasing valve overlap. For example, Patent Document 6 discloses a technique for stabilizing combustion by quickly closing intake valves. For example, Patent Document 7 discloses a technique for stabilizing combustion by energizing an intake heater during cold operation. For example, Patent Document 8 discloses a technique for stabilizing combustion by reducing an EGR (Exhaust Gas Recirculation) amount at start-up. For example, Patent Document 9 discloses a technique for calculating the amount of the white smoke by executing a fuel cut and calculating the amount of HC (hydrocarbon) in the exhaust gas. For example, Patent Document 10 discloses the generation of the white smoke due to the instability of combustion at a cold start. In addition, Patent Document 11 is present as a related art document relating to the present invention. Patent Document 11 discloses a technique for determining misfire by using a value in which digital filter processing is executed with respect to a detection value of the crank angle sensor.

RELATED ART DOCUMENTS

PATENT DOCUMENTS

Patent Document 1: Japanese Patent Application Publication No. 2009-243369
Patent Document 2: Japanese Patent Application Publication No. 2009-2234
Patent Document 3: Japanese Patent Application Publication No. 2004-360648
Patent Document 4: Japanese Patent Application Publication No. 2000-234551
Patent Document 5: Japanese Patent Application Publication No. 2007-32415
Patent Document 6: Japanese Patent Application Publication No. 2010-265814
Patent Document 7: Japanese Patent Application Publication No. 2004-293391
Patent Document 8: Japanese Patent Application Publication No. 2009-62835
Patent Document 9: Japanese Patent Application Publication No. 10-184441
Patent Document 10: Japanese Patent Application Publication No. 2008-267256
Patent Document 11: Japanese Patent Application Publication No. 8-74652

SUMMARY OF THE INVENTION

PROBLEM TO BE SOLVED BY THE INVENTION

However, the technique disclosed in the Patent Document 1 described above, for example, requires to provide the smoke sensor in the exhaust passage in order to detect the white smoke, and it has a technical problem in which the manufacturing cost may increase.

The present invention is made in view of the conventional problem described above, for example, and the object of the present invention is to provide an internal combustion engine control device that can appropriately detect that the white smoke is generated from the internal combustion engine such as the diesel engine, for example, without causing an increase in manufacturing cost, for example.

MEANS FOR SOLVING THE PROBLEM

The internal combustion engine control device according to the present invention includes, in order to solve the problems described above: detection means for detecting crank angle speed of the internal combustion engine; calculation means for calculating a combustion state index value for indicating a combustion state of the internal combustion engine based on the crank angle speed detected by the detection means; and a first determination means for determining whether or not white smoke is generated from the internal combustion engine and whether or not misfire of the internal combustion engine occurs by comparing the combustion state index value calculated by the calculation means with a specified first threshold and a specified second threshold larger than the first threshold.

According to the internal combustion engine control device according to the present invention, during the operation, the crank angle speed of the internal combustion engine such as the diesel engine installed on the vehicle, for example, (that is, rotational speed of a crankshaft) is detected by the detection means, and the combustion state index value is calculated by the calculation means based on the crank angle speed that is detected. In this case, the calculation means generates the combustion state index value by means of digital filter processing such as moving average processing or comb-filtering, for example, to the detected crank angle speed. Here, the "combustion state index value" according to the present invention is a value that indicates a combustion state of the internal combustion engine, and is generated so as to indicate the magnitude of a specified frequency component that is easily generated when the misfire of the internal combustion engine occurs (for example, 0.5-oder frequency component with a cycle of a half rotation of the crankshaft) in the detected crank angle speed, for example.

In the present invention, the first determination means particularly determines whether or not the white smoke is generated from the internal combustion engine and whether or not the misfire of the internal combustion engine occurs by comparing the calculated combustion state index value with the specified first threshold and the specified second threshold larger than the first threshold. More specifically, the first determination means determines that the white smoke is generated from the internal combustion engine when the calculated combustion state index value is larger than the first threshold and smaller than or equal to the second threshold, and determines that the misfire of the internal combustion engine occurs when the calculated combustion state index value is larger than the second threshold. In addition, the first determination means determines that the white smoke is not generated from the internal combustion engine when the calculated combustion state index value is smaller than or equal to the first threshold. Here, the studies by the inventors of the present application have revealed that the combustion state index value calculated by the calculation means based on the crank angle speed has a correlation with whether or not the misfire of the internal combustion engine occurs as well as whether or not the white smoke is generated from the internal combustion engine. Thus, a lower limit of the combustion state index value that can be calculated when the white smoke is generated from the internal combustion engine is derived in advance by experiment, simulation, and the like, and the derived lower limit is set as the first threshold. In addition, a lower limit of the combustion state index value that can be calculated when the misfire of the internal combustion engine occurs is derived in advance by experiment, simulation, and the like, and the derived lower limit is set as the second threshold. Consequently, whether or not the white smoke is generated from the internal combustion engine and whether or not the misfire of the internal combustion engine occurs can appropriately be determined by a first determination means.

Therefore, the generation of the white smoke from the internal combustion engine and the occurrence of the misfire of the internal combustion engine can be detected appropriately. Here, according to the present invention, a smoke sensor is not required to be provided separately in the exhaust passage in order to detect the white smoke, for example, and therefore, the generation of the white smoke can be detected appropriately without causing an increase in manufacturing cost.

As described above, according to the present invention, the generation of the white smoke from the internal combustion engine such as the diesel engine, for example, can be detected appropriately without causing an increase in manufacturing cost, for example.

In one aspect of the internal combustion engine control device according to the present invention, the internal combustion engine includes a glow plug that increase temperature in a combustion chamber in response to energization and an exhaust gas recirculation device that recirculates a part of exhaust gas in an exhaust passage to an intake passage, and the control device further includes a second determination means for changing an energization state of the glow plug or operating condition of the exhaust gas recirculation device when the combustion state index value calculated by the calculation means is larger than the second threshold and, after the change, determining whether or not a failure occurs in the internal combustion engine based on the combustion state index value calculated by the calculation means.

According to this aspect, the second determination means changes the energization state of the glow plug or the operating condition of the exhaust gas recirculation device when the combustion state index value calculated by the calculation means is larger than the second threshold and, after the change, determines whether or not a failure occurs in the internal combustion engine based on the combustion state index value calculated by the calculation means. More specifically, the second determination means changes the energization state of the glow plug to an ON-state in the case where the combustion state index value calculated when the energization state of the glow plug is in an OFF-state is larger than the second threshold and, after the change, determines that a failure occurs in the internal combustion engine in the case where the calculated combustion state index value is larger than the second threshold. Alternatively, in the case where the combustion state index value calculated when a part of the exhaust gas is recirculated to the intake passage by the exhaust gas recirculation device is larger than the second threshold, the operating condition of the exhaust gas recirculation device is changed so as to reduce the amount of recirculating exhaust gas (hereinafter, referred to as "EGR gas" as appropriate), and after the change, it is determined that the failure occurs in the internal combustion engine when the calculated combustion state index value is larger than the second threshold. Here, when the energization state of the glow plug is changed from the OFF-state to the ON-state or the amount of EGR gas is reduced, the combustion state index value generally decreases because of the improvement of the combustion state. However, in the case where the failure occurs in the internal combustion engine, even when the energization state of the glow plug is changed from the OFF-state to the ON-state or the amount of EGR gas is reduced, the combustion state is not improved, and the combustion state index value is kept larger than the second threshold. Therefore, as this aspect, whether or not the failure occurs in the internal combustion engine is determined based on the combustion state index value after the change of the energization state of the glow plug or the operating condition of the exhaust gas recirculation device, and accordingly the occurrence of the failure in the internal combustion engine can be detected appropriately.

Effects and other advantages of the present invention will be apparent from embodiments described below.

BRIEF DESCRIPTION OF THE DRAWINGS

[FIG. 1] FIG. 1 is a schematic configuration diagram that schematically shows the configuration of an engine system according to a first embodiment.
[FIG. 2] FIG. 2 is a flowchart that shows the flow of white smoke reduction control, misfire inhibitory control, and failure detection according to the first embodiment.
[FIG. 3] FIG. 3 is a flowchart that shows the flow of index value calculation processing according to the first embodiment.
[FIG. 4] FIG. 4 is a graph that shows a correlation between the index value calculated by an index value calculation section according to the first embodiment and the generation of white smoke.
[FIG. 5] FIG. 5 is a flowchart that shows the flow of white smoke reduction control, misfire inhibitory control, and failure detection according to a second embodiment.

MODES FOR CARRYING OUT THE INVENTION

Hereinafter, embodiments of the present invention will be described with reference to the drawings.

<First Embodiment>

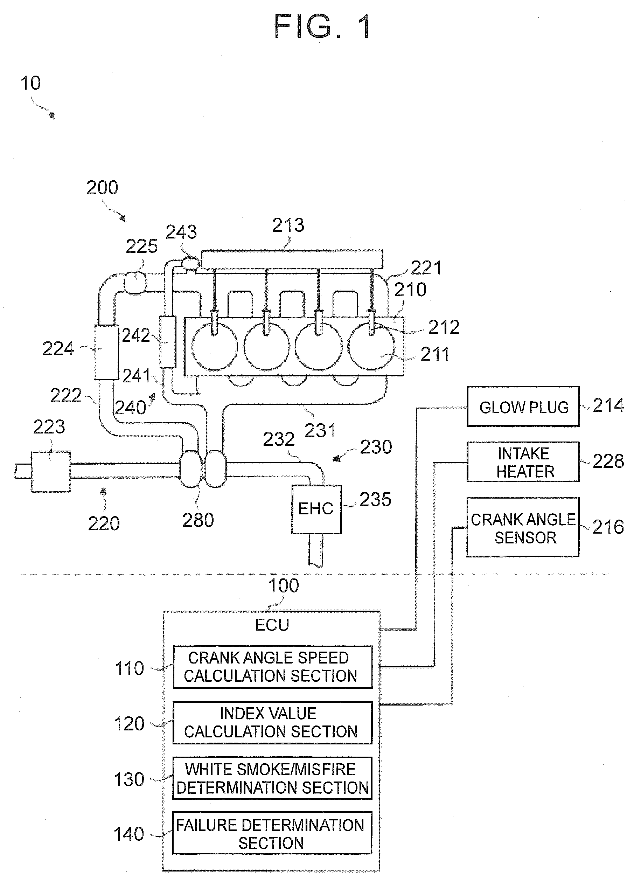

An engine system according a first embodiment is described with reference to FIG. 1 through FIG. 4.
FIG. 1 is a schematic configuration diagram that schematically shows the configuration of the engine system according to this embodiment.
In FIG. 1, an engine system 10 is installed on a vehicle that is not shown in the drawing and includes an ECU (Engine Control Unit) 100 and an engine 200.
The ECU 100 is an electronic control unit that controls whole operation of the engine 200 and includes a CPU (Central Processing Unit), a ROM (Read Only Memory), a RAM (Random Access Memory), and the like. The ECU 100 is configured to be capable of executing various controls in accordance with a control program that is stored in the ROM and the like, for example. Specific configuration of the ECU 100 is described below in detail.
The engine 200 is a 4-stroke diesel engine (compression ignition internal combustion engine) as one example of the "internal combustion engine" according to the present invention and functions as a power source of the vehicle. The engine 200 is configured to be capable of converting a reciprocating motion according to explosive power produced when a mixture including fuel is burnt in a cylinder 211 by compression self-ignition to a rotational motion of a crankshaft (crankshaft) through a connection rod. Although the engine 200 is of an in-line four-cylinder type, the number of cylinders and the arrangement of the cylinders are not particularly limited in the present invention.
The engine 200 includes an engine main body 210 that has four cylinders 211, an intake system 220 that draws air into a combustion chamber in each of the cylinders 211, an exhaust system 230 that exhausts an exhaust gas from each of the cylinders 211, an EGR system 240 that recirculates a part of the exhaust gas from each of the cylinders 211 to an intake side, and a turbocharger 280 that compresses the air in the intake system 220 by using exhaust energy in the exhaust system 230 and forces the air into the combustion chamber of the each of the cylinders 211.
Each cylinder 211 of the engine 200 is provided with a fuel injector 212 that directly sprays the fuel into the combustion chamber. Fuel injectors 212 of the cylinders 211 are connected to a shared common rail 213. The common rail 213 stores high-pressure fuel that is pressurized by a fuel pump which is not shown in the drawing. The fuel is supplied from the inside of the common rail 213 to each of the fuel injectors 212.
The fuel injector 212 is configured to be capable of spraying the fuel into the cylinder multiple times in one cycle. In other words, the fuel injector 212 can perform main injection and minute injection (that is, pilot injection) that is performed once or multiple times prior to the main injection during one cycle.
Each cylinder 211 is provided with a glow plug 214 that can increase the temperature in the combustion chamber. The energization state of the glow plug 214 is switched between ON state and OFF state in accordance with a control signal that is supplied from the ECU 100. When switched to the ON state (that is, energized), the glow plug 214 can increase the temperature in the combustion chamber. For example, when the engine 200 is started, the glow plug 214 is switched to the ON state, the temperature in the combustion chamber can be increased. It assists the ignition of the fuel, and good startability can be achieved, accordingly. When the glow plug 214 is kept in the ON state (that is to say, when the glow plug 214 is kept energized), the lifetime of the glow plug 214 may be reduced, or power consumption may be increased. The ECU 100 basically switches the glow plug 214 to the OFF state at a specified timing after the engine 200 is started in order to secure the lifetime of the glow plug 214 or to reduce the power consumption.

The engine 200 is provided with a crank angle sensor 216. The crank angle sensor 216 outputs a detection signal that indicates a crank angle which is a rotational position of the crankshaft of the engine 200 to the ECU 100. More specifically, the crank angle sensor 216 outputs one pulse as the detection signal each time when the crankshaft of the engine 200 rotates by ten degrees. In other words, the crank angle sensor 216 outputs the pulse that is generated for every 10° CA (Crank Angle) as the detection signal.

The intake system 220 is configured to include an intake manifold 221 that communicates with the combustion chamber of each cylinder 211, an intake pipe 22 that communicates with an upstream side of the intake manifold 221, an air cleaner 223 that purifies the air which is drawn (that is, induced air) on the upstream side in the intake pipe 222, an intercooler 224 that cools the induced air on a downstream side from a turbocharger 280 in the intake pipe 222, and a throttle 225 that can regulate an induced air amount into the cylinder 211 of the engine main body 210. The opening of the throttle 255 is controlled by the ECU 100. The inside of the intake manifold 221 includes an intake heater 228 that can heat the air drawn into the combustion chamber of each cylinder 211 (that is, intake air). The ECU 100 heats the intake air by switching the intake heater 228 to the ON state (that is to say, by activating) when the engine 200 is started, or when the engine 200 is not warmed up, for example. It assists the ignition of the fuel, and good startability can be achieved, accordingly.

The exhaust system 230 is configured to include an exhaust manifold 231 that communicates with the combustion chamber of each cylinder 211, an exhaust pipe 232 that communicates with the downstream side of the exhaust manifold 231, and an EHC (Electric Heating Catalyst) 235 that purifies the exhaust gas from each cylinder 211 on the downstream side from the turbocharger 280 in the exhaust pipe 232.

The EHC 235 is an electric heating catalyst that is provided on the downstream side of the turbocharger 280 in the exhaust pipe 232 and includes a catalyst which purifies the exhaust gas discharged from the cylinders 211 and heating means which electrically heats the catalyst.

The EGR system 240 is configured to include an EGR passage 241 that bypasses the combustion chamber of each cylinder 211 to connect the exhaust manifold 231 to the intake manifold 221 and recirculates the exhaust gas from each cylinder 211, an EGR cooler 242 that cools the exhaust gas passing and recirculating through the EGR passage, and an EGR valve 243 that can regulate an exhaust gas recirculating amount to the intake manifold 221 (that is, the amount of recirculating exhaust gas, and hereinafter referred to as an "EGR amount" as appropriate). The opening of the EGR valve 243 (or an opening or closing state) is controlled by the ECU 100. It should be noted that the EGR system 240 is one example of the "exhaust gas recirculation device" according to the present invention.

The turbocharger 280 is an exhaust-gas turbine type supercharger and configured so that a turbine is rotated by the energy of the exhaust gas flowing into the exhaust pipe 232 and thus the air in the intake pipe 222 can be compressed. More specifically, the turbocharger 280 is configured to include a turbine wheel that is provided in the exhaust pipe 232, a compressor wheel that is provided in the intake pipe 222, and a turbine shaft that connects the turbine wheel to the compressor wheel. The exhaust gas discharged from the engine 200 rotates the turbine wheel when passing through the exhaust pipe 232, and the compressor wheel rotates through the turbine shaft accordingly, and the air in the intake pipe 222 is compressed.

The ECU 100 is, as described above, the electronic control unit that is configured to be capable of controlling whole operation of the engine 200. The ECU 100 is connected to the components of the engine 200 by way of electric or any form that can input or output signals and thus controls the driving of the components, inputs, and outputs information.

The ECU 100 is configured to be capable of functioning as one example of the "internal combustion engine control device" according to the present invention and includes a crank angle speed calculation section 110, an index value calculation section 120, a white smoke/misfire determination section 130, a failure determination section 140.

The crank angle speed calculation section 110 calculates crank angle speed that is rotational speed of the crankshaft of the engine 200 based on the detection signal of the crank angle sensor 216. It should be noted that the crank angle speed calculation section 110 constitutes one example of the "detection means" according to the present invention together with the crank angle sensor 216. More specifically, the crank angle speed calculation section 110 calculates the time required for the crankshaft to rotate by 30° CA based on the detection signal that is the pulse generated for every 10° CA from the crank angle sensor 216 and also calculates the crank angle speed for every 30° CA by dividing 30° (that is, $\pi/6$ [rad]) by the calculated time.

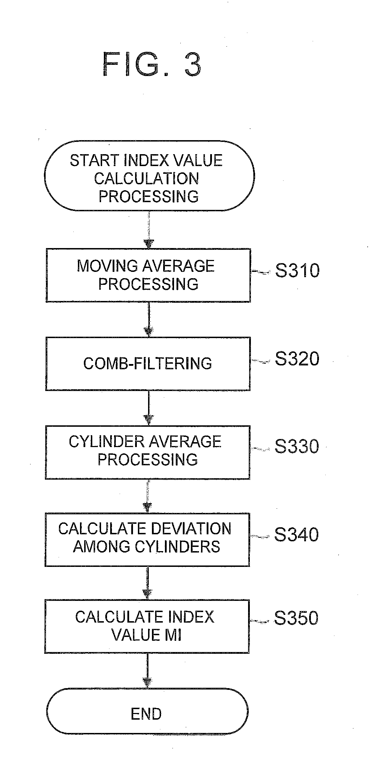

The index value calculation section 120 calculates the index value MI that indicates a combustion state of the engine 200 based on the crank angle speed calculated by the crank angle speed calculation section 110. It should be noted that the index value MI is one example of the "combustion state index value" according to the present invention. The index value calculation section 120 calculates the index value MI by means of digital filter processing such as moving average processing or comb-filtering, for example, to the crank angle speed calculated by the crank angle speed calculation section 110. The calculation method of the index value MI is described below in detail with reference to FIG. 3.

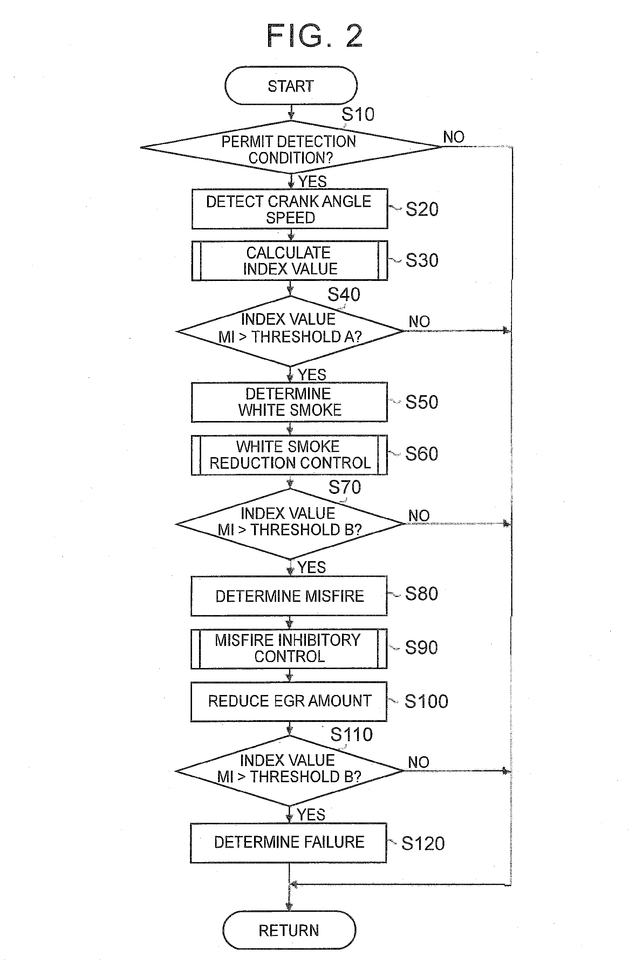

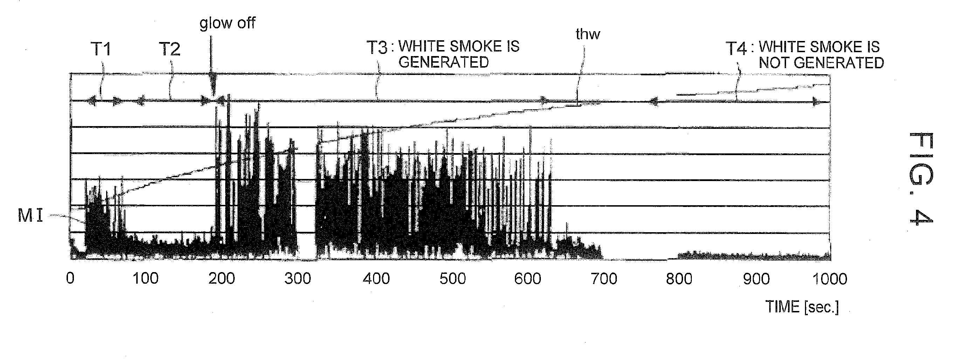

The white smoke/misfire determination section 130 is one example of the "first determination means" according to the present invention and determines whether or not the white smoke is generated from the engine 200 or whether or not the misfire of the engine 200 (that is, a phenomenon where the air-fuel mixture in the combustion chamber of the engine 200 is not ignited) occurs by comparing the index value MI calculated by the index value calculation section 120 with a specified threshold A and a specified threshold B larger than the threshold A. More specifically, the white smoke/misfire determination section 130 determines that the white smoke is generated from the engine 200 when the calculated index value MI is larger than the threshold A and smaller than or equal to the threshold B and determines that the misfire of the engine 200 occurs when the calculated index value MI is larger than the threshold B. In addition, the white smoke/misfire determination section 130 determines that the white smoke is not generated from the internal combustion engine when the calculated index value MI is smaller than or equal to the threshold A. The determination whether or not the white smoke is generated from the engine 200 or whether or not the misfire of the engine 200 occurs by the white smoke/misfire determination section 130 is described below in detail with reference to FIG. 2 and FIG. 4. It should be noted that the threshold A is one example of the "first threshold" according to the present invention and the threshold B is one example of the "second threshold" according to the present invention.

The failure determination section 140 is one example of the "second determination means" according to the present invention and determines whether or not the failure occurs in the engine 200. The failure determination section 140 changes operating condition of the EGR system 240 so as to reduce the EGR amount (that is to say, reduces the opening of the EGR valve 243) when the white smoke/misfire determination section 130 determines that the misfire of the engine 200 occurs (that is to say, when the index value MI is larger than the threshold B) and, after the change, determines whether or not a failure occurs in the engine 200 based on the index value MI calculated by the index value calculation section 210. The detection of the failure by the failure determination section 140 is described below in detail with reference to FIG. 2.

Next, white smoke reduction control, misfire inhibitory control, and failure detection, which are executed by the ECU 100 will be described with reference to FIG. 2.

FIG. 2 is a flowchart that shows the flow of the white smoke reduction control, the misfire inhibitory control, and the failure detection according to the first embodiment.

In FIG. 2, whether or not a detection condition is permitted is determined first by the ECU 100 (Step S10). In other words the ECU 100 determines whether or not a specified detection condition is satisfied. The detection condition is satisfied when the engine coolant temperature, the intake-air temperature, the engine speed, or the like of the engine 200 is within a specified range.

When the detection condition is not permitted (Step S10: No), the crank angle speed is not detected (Step S20), and whether or not the detection condition is permitted is determined again after a specified period of time by the ECU 100 (Step S10).

When the detection condition is permitted (Step S10: Yes), the crank angle speed is detected (Step S20). In other words, the crank angle speed is calculated by the crank angle speed calculation section 110 based on the detection signal of the crank angle sensor 216. The crank angle speed calculation section 110 calculates the crank angle speed for every 30° CA as described above.

Next, index value calculation processing is executed by the index value calculation section 120 (Step S30).

FIG. 3 is a flowchart that shows the flow of the index value calculation processing.

In FIG. 3, the moving average processing is first executed in the index value calculation processing with respect to the crank angle speed calculated by the crank angle speed calculation section 120 (Step S310). In other words, the index value calculation section 120 executes the moving average processing with respect to the crank angle speed for each of twelve consecutive 30° CAs. That is to say, an average value Sn is calculated in accordance with the following equation (1).

[Equation 1]

$$S_n = \frac{1}{12} \sum_{i=-11}^{0} \omega_{n+1} \qquad (1)$$

Where, $\omega n$ is the crank angle speed that is calculated in n-th place by the crank angle speed calculation section 120. The crank angle speed is calculated for every 30° CA, and thus the average value Sn is an average value corresponding to one rotation of the crankshaft.

Next, the comb-filtering about the average value Sn is executed by the index value calculation section 120 (Step S320). In other words, the index value calculation section 120 calculates a deviation amount Cn in accordance with the following equation (2).

[Equation 2]

$$C_n = S_n - S_{n-6} \qquad (2)$$

In the equation (2), the average value Sn is the latest average value, and the average value Sn-6 is the average value calculated before 180° CA. The engine 200 is the four-cylinder 4-stroke engine, and thus the air-fuel mixture is compressed in any cylinders 211 each time when the crankshaft rotates by 180° CA. A gain in the average value Sn of the deviation amount Cn calculated as described above (that is, Cn/Sn) has a frequency characteristic in which a 2k-th order component of the engine rotation (where, k = 0, 1, 2, ..., 3) decreases.

Next, cylinder average processing is executed for the deviation amount Cn (Step S330). In other words, the index value calculation section 120 calculates the average value of six consecutive deviation amounts Cn. That is to say, the index value calculation section 120 calculates an average value Mn in accordance with the following equation (3). The average value Mn is the average value of the deviation amount Cn that corresponds to 180° CA (that is, a half rotation of the crankshaft).

[Equation 3]

$$M_n = \frac{1}{6} \sum_{i=-5}^{0} C_{n+1} \qquad (3)$$

Next, the deviation among the cylinders is calculated with respect to the average value Mn (Step S340). In other words, the index value calculation section 120 calculates the difference between the average value Mn and the average value Mn-1. That is to say, the index value calculation section 120 calculates a deviation ΔMn in accordance with the following equation (4).

[Equation 4]

$$\Delta M_n = M_n - M_{n-1} \qquad (4)$$

Next, the index value MI is calculated based on the deviation ΔMn (Step S350). In other words, the index value calculation section 120 calculates the index value MI in accordance with the following equation (5).

[Equation 5]

$$MI = \sum_{i=-3}^{0} \left| \overline{X} - \Delta M_{n+i} \right| \qquad (5)$$

Where,

[Equation 6]

$$\overline{X} = \frac{1}{4} \sum_{i=-3}^{0} \Delta M_{n+i}$$

The index value MI calculated as described above varies with the magnitude of 0.5-order frequency component of the crank angle speed that appears notably when the misfire of the engine 200 occurs.

Again, in FIG. 2, after the index value calculation processing (Step S30), whether or not the index value MI is larger than the specified threshold A is determined by the white smoke/misfire determination section 130 (Step S40). In other words, the white smoke/misfire determination section 130 compares the index value MI calculated by the index value calculation section 120 with the threshold A and determines whether or not the index value MI is larger than the threshold A.

When it is determined that the index value MI is not larger than the threshold A (that is to say, the index value MI is smaller than or equal to the threshold A) (Step S40: No), the processing in relation to the step S 10 is executed again.

When it is determined that the index value MI is larger than the threshold A (Step S40: Yes), the white smoke/misfire determination section 130 determines that the white smoke is generated from the engine 200 (Step S50).

Here, the studies by the inventors of the present application have revealed that the index value MI calculated as described above based on the crank angle speed has a correlation with whether or not the misfire of the engine 200 occurs as well as whether or not the white smoke is generated from the engine 200. Therefore, as this embodiment, whether or not the white smoke is generated from the engine 200 can be determined appropriately by comparing the index value MI with the threshold A.

FIG. 4 is a graph that shows a correlation between the index value MI calculated by the index value calculation section 120 and the generation of the white smoke. FIG. 4 shows one example of changes in the index value MI over time within a specified time (1000 sec.) from the start of the engine 200. FIG. 4 also shows one example of changes in the engine coolant temperature thw over time. The graph shown in FIG. 4 is obtained through the experiment by the inventors of the present application.

In FIG. 4, the index value MI slightly increases in a first period T1 after the start of the engine 200, but decreases in a subsequent period T2 to be smaller than the value in the period T1. This is because the glow plug 214 is turned ON in the periods T1 and T2 and relatively good combustion state is achieved. In the periods T1 and T2, it has been observed that the white smoke is not generated from the engine 200.

In a period T3 subsequent to the turn-off of the glow plug 214 (glow off) after the period T2, the index value MI becomes larger than the value in the periods T1 and T2. In the period T3, it has been observed that the glow plug 214 is turned OFF, and thus the combustion state is degraded, and the white smoke is generated.

After the period T3, it has been observed that the combustion state becomes stable, and the white smoke is not generated in a period T4. In the period T4, the index value MI becomes smaller than the value in the period T3.

As described above, when the white smoke is generated from the engine 200, the index value MI becomes a relatively large value, and when the white smoke is not generated from the engine 200, the index value MI becomes a relatively small value. Accordingly, as this embodiment, when the index value MI is larger than the specified threshold A, it is determined that the white smoke is generated from the engine 200, and when the index value MI is smaller than or equal to the specified threshold A, it is determined that the white smoke is not generated from the engine 200. Consequently, it is appropriately determined whether or not the white smoke is generated from the engine 200. Here, the specified threshold A may be derived in advance as a lower limit of the index value MI that can be calculated when the white smoke is generated from the engine 200 by experiment, simulation, and the like.

In FIG. 2, after it is determined that the white smoke is generated (Step S50), the white smoke reduction control is executed by the ECU 100 (Step S60). In other words, the ECU 100 executes various controls for reducing the generation of the white smoke. More specifically, the ECU 100 controls the EGR valve 243 so as to reduce the EGR amount, turns ON the glow plug 214, controls the fuel injector 212 so as to execute the minute injection, controls the EHC 235 so as to electrically heat the catalyst, and activates the intake heater 228. This allows the reliable reduction of the generation of the white smoke from the engine 200. The white smoke can reliably be reduced by controlling, as the white smoke reduction control, any one or two or more of the EGR valve 243, the glow plug 214, the fuel injector 212, the EHC 235, and the intake heater 228. In addition, according to this embodiment, when it is determined that the white smoke is generated from the engine 200, the white smoke reduction control is executed, and thus the redundant white smoke reduction control can be avoided in a state in which the white smoke is not generated from the engine 200, for example.

Next, whether or not the index value MI is larger than the specified threshold B is determined by the white smoke/misfire determination section 130 (Step S70). In other words, the white smoke/misfire determination section 130 compares the index value MI calculated by the index value calculation section 120 with the threshold B and determines whether or not the index value MI is larger than the threshold B. It should be noted that the threshold B is larger than the threshold A as described above.

When it is determined that the index value MI is not larger than the threshold B (that is to say, the index value MI is smaller than or equal to the threshold B) (Step S70: No), the processing in relation to the step S10 is executed again.

When it is determined that the index value MI is larger than the threshold B (Step S70: Yes), the white smoke/misfire determination section 130 determines that the misfire of the engine 200 occurs (Step S80).

Here, as described above, the index value MI varies with the magnitude of 0.5-order frequency component of the crank angle speed that appears notably when the misfire of the engine 200 occurs. Therefore, as this embodiment, whether or not the misfire of the engine 200 occurs can be determined appropriately by comparing the index value MI with the threshold B. It should be noted that the threshold B can be set in advance as the lower limit of the index value MI that can be calculated when the misfire of the engine 200 occurs by experiment, simulation, and the like.

In FIG. 2, after it is determined that the misfire occurs (Step S80), the misfire inhibitory control is executed by the ECU 100 (Step S90). In other words, the ECU 100 executes various controls for inhibiting the occurrence of the misfire. More specifically, the ECU 100 controls the EGR valve 243 so as to reduce the EGR amount (or reduce to zero), turns ON the glow plug 214, controls the fuel injector 212 so as to execute the minute injection, controls the EHC 235 so as to electrically heat the catalyst, and activates the intake heater 228. This allows the reliable inhibition of the misfire of the engine 200. The misfire can reliably be inhibited by controlling, as the misfire inhibitory control, any one or two or more of the EGR valve 243, the glow plug 214, the fuel injector 212, the EHC 235, and the intake heater 228. In this case, the ECU 100 may light up a malfunction indication lamp (MIL) for notifying the driver of the occurrence of the misfire.

Next, the reduction of the EGR amount is executed by the failure determination section 140 (Step S100). In other words, the failure determination section 140 controls the EGR valve 243 to reduce the EGR amount.

Next, whether or not the index value MI is larger than the specified threshold B is determined by the failure determination section 140 (Step S110).

When it is determined that the index value MI is not larger than the threshold B (that is to say, the index value MI is smaller than or equal to the threshold B) (Step S110: No), the processing in relation to the step S10 is executed again.

When it is determined that the index value MI is larger than the threshold B (Step S110: Yes), the failure determination section 140 determines that the failure of the engine 200 occurs (Step S120).

Here, in the case where it is determined that the misfire of the engine 200 occurs because the index value MI is larger than the threshold B (Step S80) and thus the EGR amount is reduced (Step S100), when the failure of the engine 200 does not occur, the combustion state of the air-fuel mixture in the combustion chamber is improved, and consequently, the index value MI decreases (that is to say, the index value MI calculated after the reduction of the EGR amount is smaller than the index value MI calculated before the reduction of the EGR amount). On the other hand, in the case where the failure of the engine 200 occurs, even when the EGR amount is reduced (Step S100), the index value MI is kept larger than the threshold B (that is to say, any index values MI before and after the reduction of the EGR amount are larger than the threshold B) due to the occurrence of the failure. Therefore, as this embodiment, whether or not the failure of the engine 200 occurs can be determined appropriately by comparing the index value MI with the threshold B (Step S110) after the EGR amount is reduced (Step S100).

As described above, according to this embodiment, the white smoke, the misfire, and the failure of the engine 200 can be detected appropriately, and the white smoke can be reduced, as well as the occurrence of the misfire can be inhibited. More specifically here, according to this embodiment, a smoke sensor is not required to be provided separately in the exhaust passage in order to detect the white smoke, for example, and therefore, the generation of the white smoke can be detected appropriately without causing an increase in manufacturing cost.

<Second Embodiment>

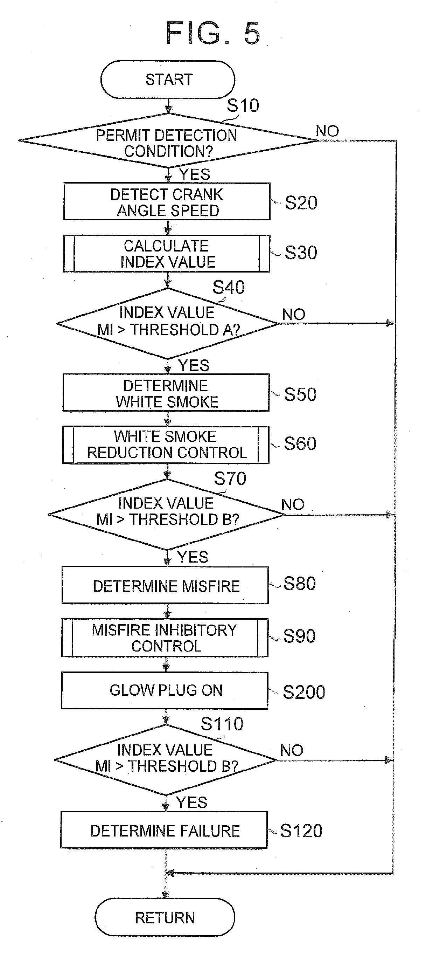

An engine system according a second embodiment is described with reference to FIG. 5.

FIG. 5 is a flowchart that shows the flow of the white smoke reduction control, the misfire inhibitory control, and the failure detection according to the second embodiment and that is intended to show the same purpose as FIG. 2. It should be noted that, in FIG. 5, the same reference numerals are given to the same steps as those according to the first embodiment shown in FIG. 2 and those descriptions are not repeated as appropriate.

The engine system according to the second embodiment is different from the engine system 10 according to the first embodiment described above in the respect that the aforementioned failure determination section 140 switches the glow plug 214 from the ON-state to the OFF-state (Step S200 in FIG. 5) instead of executing the reduction of the EGR amount (Step S100) and, in other respects, configured mostly similarly to the engine system 10 according to the first embodiment described above.

In FIG. 5, after the misfire inhibitory control (Step S90), the glow plug 214 is switched from the ON-state to the OFF-state by the failure determination section 140 (Step S200). In other words, the glow plug 214 is energized under the control of the failure determination section 140, and thus the temperature in the combustion chamber increases.

Next, whether or not the index value MI is larger than the specified threshold B is determined by the failure determination section 140 (Step S110).

When it is determined that the index value MI is larger than the threshold B (Step S110: Yes), the failure determination section 140 determines that the failure of the engine 200 occurs (Step S120).

Here, in the case where it is determined that the misfire of the engine 200 occurs because the index value MI is larger than the threshold B (Step S80) and thus the glow plug 214 is switched from the OFF-state to the ON-state (Step S200), when the failure of the engine 200 does not occur, the combustion state of the air-fuel mixture in the combustion chamber is improved, and consequently, the index value MI decreases (that is to say, the index value MI calculated when the glow plug 214 is in the ON-state is smaller than the index value MI calculated when the glow plug 214 is in the OFF-state). On the other hand, in the case where the failure of the engine 200 occurs, even when the glow plug 214 is switched from the OFF-state to the ON-state (Step S200), the index value MI is kept larger than the threshold B (that is to say, the index value MI calculated by the index value calculation section 120 is larger than the threshold B even if the glow plug 214 is in either ON-state or OFF-state) due to the occurrence of the failure. Therefore, as this embodiment, whether or not the failure of the engine 200 occurs can be determined appropriately by comparing the index value MI with the threshold B (Step S110) after the glow plug 214 is switched from the OFF-state to the ON-state (Step S200).

The present invention is not limited to the embodiments described above and can be modified appropriately within the gist of the present invention or the scope not departing from the idea of the present invention that can be read from the claims and the entire specification. The internal combustion engine control device involving such a modification also falls within the technical scope of the present invention.

DESCRIPTION OF REFERENCE NUMERALS

100    ECU

110    CRANK ANGLE SPEED CALCULATION SECTION

120    INDEX VALUE CALCULATION SECTION

130    WHITE SMOKE/MISFIRE DETERMINATION SECTION

140    FAILURE DETERMINATION SECTION

| 200 | ENGINE |
| 212 | FUEL INJECTOR |
| 213 | COMMON RAIL |
| 214 | GLOW PLUG |
| 216 | CRANK ANGLE SENSOR |
| 228 | INTAKE HEATER |
| 235 | EHC |
| 220 | INTAKE SYSTEM |
| 230 | EXHAUST SYSTEM |
| 240 | EGR SYSTEM |
| 243 | EGR VALVE |

**Claims**

1. An internal combustion engine control device, **characterized by** comprising:

   detection means for detecting crank angle speed of the internal combustion engine;
   calculation means for calculating a combustion state index value for indicating a combustion state of the internal combustion engine based on the crank angle speed detected by the detection means; and
   first determination means for determining whether or not white smoke is generated from the internal combustion engine and whether or not misfire of the internal combustion engine occurs by comparing the combustion state index value calculated by the calculation means with a specified first threshold and a specified second threshold larger than the first threshold.

2. The internal combustion engine control device according to claim 1,
   wherein the internal combustion engine includes a glow plug that increases temperature in a combustion chamber in response to energization and an exhaust gas recirculation device that recirculates a part of exhaust gas in an exhaust passage to an intake passage, and
   wherein the control device further includes second determination means for changing an energization state of the glow plug or operating condition of the exhaust gas recirculation device when the combustion state index value calculated by the calculation means is larger than the second threshold and, after the change, determining whether or not a failure occurs in the internal combustion engine based on the combustion state index value calculated by the calculation means.

# FIG. 1

# FIG. 2

```
        ( START )
            │ S10
     ◇ PERMIT DETECTION ◇ ── NO
       CONDITION?
            │ YES
   ┌─────────────────┐
   │ DETECT CRANK ANGLE │ ~ S20
   │      SPEED        │
   └─────────────────┘
   ┌─────────────────┐
   │    CALCULATE     │ ~ S30
   │  INDEX VALUE     │
   └─────────────────┘
            │ S40
     ◇ INDEX VALUE ◇ ── NO
       MI > THRESHOLD A?
            │ YES
   ┌─────────────────┐
   │    DETERMINE     │ ~ S50
   │  WHITE SMOKE     │
   └─────────────────┘
   ┌─────────────────┐
   │  WHITE SMOKE     │ ~ S60
   │ REDUCTION CONTROL│
   └─────────────────┘
            │ S70
     ◇ INDEX VALUE ◇ ── NO
       MI > THRESHOLD B?
            │ YES
   ┌─────────────────┐
   │ DETERMINE MISFIRE │ ~ S80
   └─────────────────┘
   ┌─────────────────┐
   │ MISFIRE INHIBITORY│ ~ S90
   │     CONTROL      │
   └─────────────────┘
   ┌─────────────────┐
   │ REDUCE EGR AMOUNT │ ~ S100
   └─────────────────┘
            │ S110
     ◇ INDEX VALUE ◇ ── NO
       MI > THRESHOLD B?
            │ YES
   ┌─────────────────┐
   │ DETERMINE FAILURE │ ~ S120
   └─────────────────┘
            │
        ( RETURN )
```

# FIG. 3

```
        ╭─────────────────────╮
        │  START INDEX VALUE   │
        │     CALCULATION      │
        │     PROCESSING       │
        ╰─────────────────────╯
                  │
                  ▼
        ┌─────────────────────┐
        │   MOVING AVERAGE     │──── S310
        │     PROCESSING       │
        └─────────────────────┘
                  │
                  ▼
        ┌─────────────────────┐
        │   COMB-FILTERING     │──── S320
        └─────────────────────┘
                  │
                  ▼
        ┌─────────────────────┐
        │  CYLINDER AVERAGE    │──── S330
        │     PROCESSING       │
        └─────────────────────┘
                  │
                  ▼
        ┌─────────────────────┐
        │ CALCULATE DEVIATION  │──── S340
        │   AMONG CYLINDERS    │
        └─────────────────────┘
                  │
                  ▼
        ┌─────────────────────┐
        │  CALCULATE INDEX     │──── S350
        │     VALUE MI         │
        └─────────────────────┘
                  │
                  ▼
        ╭─────────────────────╮
        │        END          │
        ╰─────────────────────╯
```

# FIG. 4

# FIG. 5

```
                    ┌──────────┐
                    │  START   │
                    └──────────┘
                         │
                         ▼              S10
          ◇─────────────────────────────◇  NO
          │   PERMIT DETECTION          │──────┐
          │   CONDITION?                │      │
          ◇─────────────────────────────◇      │
                    │ YES                       │
                    ▼                           │
          ┌─────────────────────┐              │
          │  DETECT CRANK       │  S20         │
          │  ANGLE SPEED        │              │
          └─────────────────────┘              │
                    │                           │
                    ▼                           │
          ┌─────────────────────┐              │
          ║  CALCULATE          │  S30         │
          ║  INDEX VALUE        │              │
          └─────────────────────┘              │
                    │        S40                │
                    ▼                           │
          ◇─────────────────────────────◇  NO  │
          │   INDEX VALUE               │──────┤
          │   MI > THRESHOLD A?         │      │
          ◇─────────────────────────────◇      │
                    │ YES                       │
                    ▼                           │
          ┌─────────────────────┐              │
          │  DETERMINE          │  S50         │
          │  WHITE SMOKE        │              │
          └─────────────────────┘              │
                    │                           │
                    ▼                           │
          ┌─────────────────────┐              │
          ║  WHITE SMOKE        ║  S60         │
          ║  REDUCTION CONTROL  ║              │
          └─────────────────────┘              │
                    │        S70                │
                    ▼                           │
          ◇─────────────────────────────◇  NO  │
          │   INDEX VALUE               │──────┤
          │   MI > THRESHOLD B?         │      │
          ◇─────────────────────────────◇      │
                    │ YES                       │
                    ▼                           │
          ┌─────────────────────┐              │
          │  DETERMINE MISFIRE  │  S80         │
          └─────────────────────┘              │
                    │                           │
                    ▼                           │
          ┌─────────────────────┐              │
          ║  MISFIRE INHIBITORY │  S90         │
          ║  CONTROL            │              │
          └─────────────────────┘              │
                    │                           │
                    ▼                           │
          ┌─────────────────────┐              │
          │  GLOW PLUG ON       │  S200        │
          └─────────────────────┘              │
                    │        S110               │
                    ▼                           │
          ◇─────────────────────────────◇  NO  │
          │   INDEX VALUE               │──────┤
          │   MI > THRESHOLD B?         │      │
          ◇─────────────────────────────◇      │
                    │ YES                       │
                    ▼                           │
          ┌─────────────────────┐              │
          │  DETERMINE FAILURE  │  S120        │
          └─────────────────────┘              │
                    │                           │
                    ◄──────────────────────────┘
                    ▼
             ┌──────────┐
             │  RETURN  │
             └──────────┘
```

# EP 2 738 376 A1

<table>
<tr><td colspan="2"><b>INTERNATIONAL SEARCH REPORT</b></td><td>International application No.<br>PCT/JP2011/067302</td></tr>
</table>

| A. CLASSIFICATION OF SUBJECT MATTER |
|---|
| *F02D45/00*(2006.01)i, *F02D21/08*(2006.01)i |

According to International Patent Classification (IPC) or to both national classification and IPC

| B. FIELDS SEARCHED |
|---|
| Minimum documentation searched (classification system followed by classification symbols)<br>F02D45/00, F02D21/08 |

Documentation searched other than minimum documentation to the extent that such documents are included in the fields searched
Jitsuyo Shinan Koho          1922-1996   Jitsuyo Shinan Toroku Koho    1996-2011
Kokai Jitsuyo Shinan Koho    1971-2011   Toroku Jitsuyo Shinan Koho    1994-2011

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2008-190391 A  (Nissan Diesel Motor Co., Ltd.),<br>21 August 2008 (21.08.2008),<br>claim 5<br>(Family: none) | 1,2 |
| Y | JP 2003-239748 A  (Yanmar Co., Ltd.),<br>27 August 2003 (27.08.2003),<br>paragraphs [0021], [0062]<br>(Family: none) | 1,2 |
| Y | JP 2002-349370 A  (Toyota Motor Corp.),<br>04 December 2002 (04.12.2002),<br>paragraphs [0033], [0034]<br>(Family: none) | 2 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    09 September, 2011 (09.09.11) | Date of mailing of the international search report<br>    20 September, 2011 (20.09.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2011/067302 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-325694 A  (Toyota Motor Corp.), 24 November 2005 (24.11.2005), paragraph [0045] (Family: none) | 2 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009243369 A
- JP 2009002234 A
- JP 2004360648 A
- JP 2000234551 A
- JP 2007032415 A
- JP 2010265814 A
- JP 2004293391 A
- JP 2009062835 A
- JP 10184441 A
- JP 2008267256 A
- JP 8074652 A